# EUROPÄISCHE PATENTSCHRIFT

(11) **EP 2 608 417 B1**
(45) Veröffentlichungstag und Bekanntmachung des Hinweises auf die Patenterteilung: **22.07.2020**
(21) Anmeldenummer: 12194232.0
(22) Anmeldetag: 26.11.2012
(51) Int. Cl.: H04B 3/54, H02J 13/00

(54) **Verfahren und System zur Überwachung des Zustands eines Versorgungsnetzwerks**
Method and system for monitoring the condition of a supply grid
Procédé et système de surveillance de l'état d'un réseau d'alimentation

(30) Priorität: 23.12.2011 DE 102011089900; 10.10.2012 DE 102012218479
(43) Veröffentlichungstag der Anmeldung: 26.06.2013
(73) Patentinhaber: Power Plus Communications AG, 68167 Mannheim (DE)
(72) Erfinder: Schönberg, Ingo, 69469 Weinheim (DE); Rindchen, Markus, 67574 Osthofen (DE)
(74) Vertreter: Patent- und Rechtsanwälte Ullrich & Naumann

(56) Entgegenhaltungen:
- EP-A1- 2 211 479
- WO-A1-00/38402
- WO-A2-03/094765
- US-A- 5 457 689
- US-A1- 2003 083 786
- US-A1- 2006 071 776
- US-A1- 2009 070 616
- US-A1- 2011 080 301

## Beschreibung

Die Erfindung betrifft ein Verfahren zur Überwachung des Zustands eines Versorgungsnetzwerks, wobei das Versorgungsnetzwerk zur Übertragung von elektrischer Energie und zur Datenübertragung unter Verwendung eines PLC (Power-Line Communication)-Systems ausgebildet ist. Die Erfindung betrifft ferner ein entsprechendes System.

Sehr viele Energieversorgungsnetze stoßen mittlerweile an die Grenzen ihrer Kapazität. Ursachen hierfür sind unter anderem ein steigender Kostendruck bei den Energieversorgern und - insbesondere in dichter besiedelten Gebieten - Schwierigkeiten, die Zustimmung für den Bau von neuen Trassen zu erhalten. Andererseits wird der Betrieb der Netze immer kritischer, da die Bereitstellung der benötigten Energie sowohl für Privatkunden als auch für Geschäftskunden eine essentielle Bedeutung hat. Bei Ausfall der Energieversorgung ist der wirtschaftliche Schaden schnell sehr hoch. Wie nie zuvor sind die heutige Gesellschaft und ihre Produktivität abhängig von einer gesicherten Energieversorgung.

Durch das Erreichen der Kapazitätsgrenzen stehen in einigen Bereichen kaum Redundanzen zur Verfügung, um einen Fehler im Netz durch alternative Versorgungsstrecken ausgleichen zu können. In urbanen Gegenden wird im Mittel- und Niederspannungsbereich gelegentlich eine Ringspeisung vorgenommen, bei der ein Verbraucher über zwei unabhängige Trassen ringförmig gespeist wird. Auf diese Weise kann prinzipiell eine der beiden Trassen ausfallen, ohne dass die Versorgung des Verbrauchers beeinträchtigt ist. Allerdings sind Ringspeisungen nur bedingt einsetzbar. So müssen die Verbraucher ausreichend nahe beieinanderliegen, um die Kosten dieser Versorgung im Rahmen halten zu können. Zudem muss jede der beiden Trassen im Fehlerfall in der Lage sein, ausreichend Energie für den Ring zu transportieren. Im Extremfall muss eine Trasse nahezu alle Verbraucher des Rings mit Energie versorgen können, da sonst eine Überlastung des Rings drohen kann.

Als kostengünstigere Alternative zu einer redundanten Anbindung wird versucht, bei Ausfall einer Trasse die Versorgungslücke beim Verbraucher so gering wie möglich zu halten. Hierzu ist es durch die Vielzahl der angeschlossenen Verbraucher und dezentralen Erzeuger auch auf der Ebene der Mittel- und Niederspannung notwendig, Fehler im Netz schnellstmöglich zu lokalisieren und beheben zu können. Nur dadurch kann der volkswirtschaftliche Schaden im Grenzen gehalten werden. Eine komplette Überwachung der Netze ist allerdings zu aufwendig und zu teuer in der Realisierung, um ernsthaft in Betracht gezogen werden zu können. Daher werden in der Praxis im Fehlerfall häufig die Leistungsschalter auf einer ausgefallenen Trasse vollständig abgeschaltet und der Reihe nach wieder eingeschaltet. Nach jedem Wiedereinschalten eines Leistungsschalters wird eine steigende Testspannung auf die Trasse gelegt. Steigt der Strom zu stark an oder schaltet der Leistungsschalter automatisch ab, kann auf einen Fehler geschlossen werden. Ist der Strom in einem üblichen Rahmen, wird das Teilsegment als fehlerfrei bewertet und mit dem nächsten Teilsegment fortgefahren. Nach Lokalisierung muss der Fehler behoben werden, bevor die Trasse wieder in Betrieb gehen kann. Es ist offensichtlich, dass diese Art der Fehlersuche langwierig ist und wertvolle Zeit verloren geht.

Auf der Mittelspannungsebene gibt es Lösungen zur Fernüberwachung der Betriebsmittel. Meist beziehen sich diese Lösungen jedoch auf die "Anlage" selbst, d.h. die Transformatoren, die dazugehörigen Leistungsschalter und deren Funktion. Die Leitungstrecke dazwischen wird aus Kostengründen selten überwacht.

Der vorliegenden Erfindung liegt daher die Aufgabe zugrunde, ein Verfahren und ein System der eingangs genannten Art derart auszugestalten und weiterzubilden, dass ein Fehler in einem Energieversorgungsnetz möglichst frühzeitig erkannt und möglichst schnell identifiziert werden kann.

Erfindungsgemäß wird die voranstehende Aufgabe durch die Merkmale des Anspruchs 1 gelöst. Danach ist das in Rede stehende Verfahren gekennzeichnet durch die Schritte:
wiederholtes Beziehen mindestens eines Parameters von mehreren Komponenten des PLC-Systems mittels einer Datensammeleinheit, wobei der mindestens eine Parameter jeweils zum Zwecke der Aufrechterhaltung einer Kommunikation gewonnene Informationen über die Nutzbarkeit eines Segments des Versorgungsnetzwerkes für die Datenübertragung enthält,
Speichern der durch die Datensammeleinheit bezogenen Parameter als Parameterdaten,
Bilden eines zeitlichen Verlaufs aus den Parameterdaten,
Bestimmen des Zustands und/oder einer Zustandsänderung des Versorgungsnetzwerks mittels einer Bewertungseinheit unter Verwendung des zeitlichen Verlaufs der Parameterdaten.

Hinsichtlich eines Systems ist die voranstehende Aufgabe durch die Merkmale des Anspruchs 13 gelöst. Danach umfasst das in Rede stehende System:
eine Datensammeleinheit zum wiederholten Sammeln von mindestens einem Parameter von mehreren der PLC-Komponenten, wobei der mindestens eine Parameter jeweils zum Zwecke der Aufrechterhaltung einer Kommunikation gewonnene Informationen über die Nutzbarkeit eines Segments des Versorgungsnetzwerkes für die Datenübertragung enthält,
eine Verarbeitungseinheit zum Speichern der durch die Datensammeleinheit bezogenen Parameter als Parameterdaten und zum Bilden eines zeitlichen Verlaufs aus den Parameterdaten,
einer Bewertungseinheit zum Ermitteln des Zustands und/oder einer Zustandsänderung des Versorgungsnetzwerks unter Verwendung des zeitlichen Verlaufs der Parameterdaten

In erfindungsgemäßer Weise ist zunächst erkannt worden, dass eine Überwachung des Zustands eines Versorgungsnetzwerkes zu geringen Kosten und insbesondere ohne ein dediziertes, kostenintensives Netzwerküberwachungssystem möglich ist. Vielmehr lässt sich durch geschicktes Sammeln von anderweitig bereits ermittelten Informationen ein umfassendes Bild über den Zustand des Versorgungsnetzwerkes gewinnen. Hierzu werden erfindungsgemäß Parameter aus einem PLC (Power-Line Communication)-System gesammelt, das zur Übertragung von Daten über das Versorgungsnetzwerk betrieben wird. Es ist nämlich erkannt worden, dass viele dieser Parameter einen identifizierbaren äußeren Einfluss wiederspiegeln. Auf diese Weise können Aussagen über das Medium (nämlich das Versorgungsnetzwerk), auf dem das BPL-System zum Einsatz kommt, gemacht werden.

Ein PLC-System besteht aus mehreren PLC-Komponenten, nämlich mindestens zwei PLC-Modems, zwischen denen Daten ausgetauscht werden, und üblicherweise - in Abhängigkeit der Streckenlänge, über die die Daten übertragen werden sollen - aus einem oder mehreren Verstärkern bzw. Repeatern. Hinzu kommen gegebenenfalls weitere Komponenten, die das Netzwerk und/oder Datenströme innerhalb des Netzwerks steuern. Durch jede dieser PLC-Komponenten werden Informationen über die Nutzbarkeit eines Segments des Versorgungsnetzwerks für die Datenübertragung als Parameter ermittelt. In vielen Fällen ist ein derartiges Segment durch die Strecke zu dem/den nächsten Nachbar/n gebildet. Diese Informationen über die Nutzbarkeit werden zum Steuern der Sendeeinrichtungen, beispielsweise verwendete Subkanäle, die in den einzelnen Subkanälen eingesetzte Modulationsart oder die Sendeverstärkung, ermittelt. Entsprechend ihrem unmittelbaren Zweck, nämlich der Aufrechterhaltung der Kommunikation, werden diese Informationen gewonnen, ausgewertet, genutzt und anschließend wieder verworfen. Eine Speicherung erfolgt nicht. Erfindungsgemäß werden jedoch genau diese Informationen als Parameter von Komponenten des PLC-Systems gesammelt.

Erfindungsgemäß ist nämlich erkannt worden, dass aus einem zeitlichen Verlauf eines oder mehrerer dieser Parameter Informationen über den Zustand einer Teilstrecke des Versorgungsnetzwerks extrahiert werden können. Daher wird erfindungsgemäß durch eine Datensammeleinheit mindestens einer der Parameter von mehreren PLC-Komponenten bezogen und durch eine Verarbeitungseinheit verarbeitet und/oder gespeichert. Insbesondere bildet die Verarbeitungseinheit einen zeitlichen Verlauf der Parameterdaten. Aus dem zeitlichen Verlauf lassen sich weitreichende Informationen über den Zustand der Strecke zwischen zwei PLC-Komponenten gewinnen. Aus mehreren zusammenhängenden Strecken kann der Zustand eines größeren Netzwerks von Strecken ermittelt werden. Durch Auswertung der Zustandsinformationen können Fehler erkannt und sogar aufkommende Fehlerstellen detektiert werden. Es ist sogar eine gewisse Ortsauflösung der Fehlerquelle realisierbar. Unter Nutzung dieser Informationen kann die Betriebssicherheit des Versorgungsnetzwerks verbessert und im Fehlerfall eine schnelle Analyse und Fehlerbehebung ermöglicht oder zumindest erheblich begünstigt werden. Dabei sind keine zusätzlichen Überwachungseinrichtungen notwendig. Vielmehr werden die ohnehin in dem PLC-System vorhandene Informationen gesammelt und geeignet ausgewertet.

Das erfindungsgemäße Verfahren und das erfindungsgemäße System lässt sich prinzipiell über alle Schichten des OSI Modells hinweg anwenden. Es können Parameter auf allen Schichten anfallen und genutzt werden. Sehr viele der Parameter werden zwar der Bitübertragungsschicht (Schicht 1: Physical), der Sicherungsschicht (Schicht 2: Data Link) oder der Vermittlungsschicht (Schicht 3: Network) zuzurechnen sein. Allerdings können auch die anderen Schichten Informationen über die Qualität einer Verbindung ergeben. So wird sich beispielsweise ein Verbindungsabbruch oder ein Neuaufbau einer Verbindung bis in die Anwendungsschicht auswirken, so dass auch dort Parameter extrahierbar sind.

Als PLC-Komponenten können prinzipiell alle in einem PLC-System verwendeten Komponenten fungieren. Jede PLC-Komponente, die an der Übertragung von Daten über das PLC-System beteiligt ist, kann geeignete Parameter liefern. Die PLC-Komponente kann sogar durch das NMS (Network Management System) gebildet sein, das primär Managementaufgaben innerhalb des PLC-Netzwerks übernimmt. Allerdings liegen auch dort beispielsweise Informationen über die PLC-Netzstruktur, End-zu-Endverbindungen zwischen PLC-Komponenten und das Routing von Daten vor, die als Parameter im Sinne der Erfindung nutzbar sind. Auch eine CU (Central Unit) lässt sich als PLC-Komponente nutzen. Die CU ist in einem PLC-System die PLC-Komponente, mit der sich ein PLC-Modem eines PLC-Endgeräts verbindet. Beispiele weiterer nutzbarer PLC-Komponenten sind ein PLC-Modem, ein PLC-Gateway, ein PLC-Repeater oder ein PLC-Verstärker.

Prinzipiell können das erfindungsgemäße Verfahren und das erfindungsgemäße System im Zusammenhang mit den verschiedensten PLC-Systemen eingesetzt werden. Vorzugsweise kommen diese jedoch bei einem Breitband-Power-Line-System (BPL-System) zum Einsatz.

Das erfindungsgemäße Verfahren und das erfindungsgemäße System werden vorzugsweise im Niederspannungsbereich und im Mittelspannungsbereich eingesetzt.

Die Bitübertragungsschicht eines PLC-Systems ist zuständig für die physikalische Übertragung der Informationen und stellt damit die übertragungstechnischen Verfahren zur Verfügung. In allen modernen PLC-Systemen, die verschiedene Modulationsstufen einsetzen, wird mindestens eine Form der Kanalschätzung durchgeführt. Bei BPL-Systemen wird diese mittels "pilot tones" durchgeführt, die bei Verbindungsaufbau zwischen zwei PLC-Komponenten gesendet werden. Dadurch wird ermittelt, welche Teile des PLC-Spektrums für die Kommunikation in welcher Weise verwendet werden können und wie gut das Signal-zu-Rausch-Verhältnis (SNR) ist. Typische Ergebnisse dieser Kanalschätzung sind SNR-Werte, aus denen wiederum das verwendete Modulationsverfahren resultiert (beispielsweise BPSQ, QPSK, QAM, 256QAM, etc.). Des Weiteren werden die direkten Nachbarn und die Verbindung der PLC-Komponente zu diesen identifiziert. In einer vorteilhaften Ausgestaltung der Erfindung werden Parameter, die über die pilot tones gewonnen wurden, in dem erfindungsgemäßen Verfahren genutzt.

In einer Ausgestaltung der Erfindung wird das SNR in dem PLC-Spektrum und/oder in einem Subkanal des PLC-Spektrums als Parameter verwendet und ausgewertet. Der SNR-Wert einer Verbindung erlaubt eine generelle Aussage über die Qualität der Verbindung. Moderne Mehrträgerverfahren wie OFDM (Orthogonal Frequency Division Multiplexing) bestimmen den SNR für jeden Einzelträger. Damit lässt sich eine detaillierte Aussage über die vorliegenden Störungen treffen. Bei dieser Ausgestaltung des erfindungsgemäßen Verfahrens und des erfindungsgemäßen Systems werden die SNR-Werte gespeichert, eventuell vorverarbeitet und an Verarbeitungseinheit zur weiteren Speicherung und Interpretation schicken. Daraus können zeitliche Verläufe erstellt werden, anhand derer man die Störverläufe

Es hat sich gezeigt, dass hochfrequente Störungen, d.h. Störungen im oberen Bereich des PLC-Spektrums, und deren zeitlicher Verlauf auf eine aufkommende Störung des Segments des Versorgungsnetzwerks hindeuten. Mit zunehmender Materialermüdung oder zunehmendem Verschleiß nehmen Teilentladungen zu, die zu hochfrequenten Störungen führen. Als eine der wichtigsten Störungen, die auf diesem Wege detektiert werden können, sei ein aufkommender Kurzschluss genannt. Bei Erdkabeln, bei denen schleichend ein Erdschluss oder eine andere Art von Kurzschluss entsteht, hat sich beispielsweise gezeigt, dass infolge von Teilentladungen hochfrequente Störungen zunehmen und dass sich mit der Zeit deren Frequenz ändert. Aus der Auswertung der gestörten Teile des PLC-Spektrums und deren zeitlicher Verlauf kann auf das Aufkommen eines Erdschlusses geschlossen werden.

In einer anderen Ausgestaltung der Erfindung wird als Parameter die Modulationsart ausgewertet, die durch eine PLC-Komponente in einem Subkanal verwendet wird. Die Modulationsarten werden auch als "Modulation Schemes" bezeichnet. Die Modulationsart wird üblicherweise per Subträger festgelegt und ändert sich mit dem Umgebungsrauschen. Mit Speicherung dieser Daten kann eine Auswertung vorgenommen werden, die die Änderungen dokumentiert. Viele Störungen, wie beispielsweise Teilentladungen können durch den generierten "Störnebel" identifiziert werden, den diese Störungen verursachen. Über den zeitlichen Verlauf dieses Parameters kann damit eine Aussage über den Zustand des Versorgungsnetzwerks getroffen werden.

In einer weiteren Ausgestaltung der Erfindung werden als Parameter die durch einen PLC-Komponente direkt erreichbaren Nachbarn (sogenannte "direct neighbour connections") genutzt und ausgewertet. Wenn ein Nachbar, d.h. eine in Sendeentfernung einer PLC-Komponente gelegene weitere PLC-Komponente, regelmäßig erreichbar war und eine Verbindung zu diesem nun nicht mehr aufgebaut werden kann, so kann dies auf eine Störstelle im Versorgungsnetzwerk hinweisen. Entsprechendes gilt, wenn die Qualität der Verbindung, beispielsweise die übertragbare Datenrate, signifikant abnimmt.

Als ein Spezialfall der "direct neighbour connections" kann genutzt werden, welche der möglichen direkten Nachbarn einer PLC-Komponente tatsächlich den nächsten Hop auf dem Übertragungsweg wird. In PLC-Systemen wird - wie bei den meisten Systemen, die für größere Ausdehnungen ausgelegt sind - ein Datenpaket selten direkt von einer Sende-Komponente zu einer Ziel-Komponente übertragen. Vielmehr ist häufig eine oder mehrere PLC-Komponente auf dem Übertragungsweg an der Übertragung des Datenpakets beteiligt. Jede PLC-Komponente, die das Datenpaket weitertransportiert wird als Hop bezeichnet. Der nächste Hop ist der Nachbar einer PLC-Komponente, der das Datenpaket weitertransportiert. Durch Auswertung des zeitlichen Verlaufs dieses Parameters kann ein verändertes Routing innerhalb des PLC-Netzwerks detektiert werden. Ein geänderter Routing kann ein Indiz für ein gestörtes Segment des Versorgungsnetzwerks sein.

Im Umkehrschluss können "second neighbour information", d.h. Informationen über die Nachbarn, die nicht zum nächsten Hop geworden sind, ausgewertet werden.

Ein Spezialfall des Verfolgens der Routingwege ist das sogenannte CU Hopping. In einem PLC-System ist die CU die PLC-Komponenten, mit der sich ein PLC-Modem eines PLC-Endgeräts verbindet. Wenn sich ein PLC-Modem stets mit einer bestimmten CU verbunden hat und dann die CU wechselt, kann dies ein Indiz für ein gestörtes Segment des Versorgungsnetzwerks sein.

In einer weiteren Ausgestaltung der Erfindung wird aktiv ein Testsignal auf eine PLC-Strecke gegeben und die Antwort gemessen, wobei das Testsignal breitbandig ausgestaltet ist. Die derart gewonnenen Daten können ebenso als Parameter im Sinne der Erfindung genutzt werden. Breitbandig bedeutet in diesem Zusammenhang, dass ein nicht unerheblicher Bereich des PLC-Spektrums durch das Testsignal genutzt wird, wobei das Testsignal auch Frequenzbereiche außerhalb des PLC-Spektrums nutzen kann. Als breitbandiges Testsignal kann ein Rauschsignal oder ein relativ beliebig gestaltetes Signal verwendet werden. In allen Fällen kann das Testsignal auf den jeweiligen Testzweck angepasst sein.

Vorzugsweise ist das Testsignal durch ein OFDM (Orthogonal Frequency Division Multiplexing)-Testsignal gebildet. Dabei werden eine sendende PLC-Komponente und eine empfangende PLC-Komponente dazu genutzt, um spezielle Testsignale zu generieren und auszusenden. Die Veränderung des PLC-Testsignals auf der Übertragungsstrecke charakterisiert die Übertragungsstrecke. Diese OFDM-Testsignale können sich sowohl in ihrer Länge als auch in ihrem Inhalt von normalen OFDM-Frames unterscheiden. Ein OFDM-Testsignal kann hinsichtlich bestimmter Erfordernisse ausgestaltet sein. So können beispielsweise lediglich höherfrequente Subkanäle in dem OFDM-Testsignal genutzt werden, um höherfrequente Störungen zu untersuchen. OFDM-Testsignale können im laufenden Betrieb des PLC-Systems genutzt werden. Vorzugsweise werden OFDM-Testsignals jedoch dazu genutzt, um bei einem Ausfall des Versorgungsnetzwerks oder bei Wartungsarbeiten Segmente des Versorgungsnetzwerks zu untersuchen und zu bewerten.

Vorteilhafter Weise kann auch die Impedanz einer Strecke und dort insbesondere die Zugangsimpedanz eines PLC-Modems ausgewertet werden. Zur Messung der Impedanz der Strecke können beispielsweise Korrelationsmessungen durchgeführt werden, bei denen die Antwort auf ein Sendesignal mit dem Sendesignal verglichen wird. Das Sendesignal könnte beispielsweise durch ein OFDM-Testsignal gebildet sein. Eine Änderung der Impedanz kann beispielweise auf eine ungewöhnlich hohe mechanische Belastung eines Erdkabels oder ein Eindringen von Feuchtigkeit in die Ummantelung hindeuten. Im ersten Fall werden die Abstände der einzelnen Leiter der Leitung verändert. Im zweiten Fall wird lokal die Impedanz gesenkt. Andererseits kann eine Änderung der Impedanz auf eine Störung an dem Anschlusspunkt hindeuten. So kann sich beispielweise ein Defekt eines Schützes andeuten.

In einer weiteren Ausgestaltung werden AFE (Analog FrontEnd)-Parameter einer PLC-Komponente genutzt. Üblicherweise werden in jedem PLC-Modem einer PLC-Komponente die Sendeverstärkung und die Empfangsverstärkung adaptiv an die jeweiligen Gegebenheiten angepasst. Die adaptive Sendeverstärkung kann ebenso als Parameter genutzt werden wie eine adaptive Empfangsverstärkung. Eine schleichend zunehmende Sendeverstärkung kann beispielsweise auf eine sinkende Anschlussimpedanz hindeuten. Eine zunehmende Empfangsverstärkung kann ein Hinweis darauf sein, dass ein PLC-Signal zunehmend auf dem Übertragungsweg gedämpft wird. Damit können aus den AFE-Parametern Rückschlüsse auf den Zustand eines Segments des Versorgungsnetzwerks gezogen werden.

In einer noch weiteren Ausgestaltung der Erfindung werden Verbindungsabbrüche bei einer PLC-Komponente ausgewertet. Eine zunehmende Anzahl von Verbindungsabbrüchen deutet auf eine Störung des Versorgungsnetzwerks hin.

Darüber hinaus können Daten aus dem NMS (Network Management System) des PLC-Systems genutzt werden. So kann das NMS beispielsweise Informationen über die PLC-Netzstruktur, die End-zu-End-Verbindungen und das Routing der Daten liefern. Auch hier kann ein zeitlicher Verlauf gebildet werden und Rückschlüsse auf den Zustand des Versorgungsnetzwerks gezogen werden.

Vorteilhafter Weise kann die "Routing History" verwendet werden. So können aus den Veränderungen einer Routingstrecke Rückschlüsse auf die Qualität einer Strecke gezogen werden. Wenn eine Strecke bisher immer in einer bestimmten Route enthalten war und dann nicht mehr genutzt wird, können der Wechsel auf eine Störung und ein aufkommender Fehler auf der Strecke hindeuten.

In einer weiteren Ausgestaltung der Erfindung können als Parameter Informationen aus der Fehlerkorrektur und der Fehlerbehandlung (beispielsweise erneutes Anfragen eines Datenframes) einer PLC-Komponente genutzt und ausgewertet werden. Die Notwendigkeit einer Fehlerkorrektur deutet darauf hin, dass ein Datenframe auf dem Übertragungsweg gestört wurde. Üblicherweise kommen derartige Störungen, die zu korrekturbedürftigen Datenframes oder gar zu einer Anforderung einer erneuten Übertragung führen, relativ selten vor. Treten Fehlerkorrekturen oder Fehlerbehandlungen zunehmend häufig auf, kann auf ein Problem in dem Segment des Versorgungsnetzwerks geschlossen werden.

Der Schritt des Speicherns der durch die Datensammeleinheit bezogenen Parameter als Parameterdaten kann aus einem einfachen Speichern der Parameter in zeitlicher Reihenfolge bestehen. Allerdings können zum Erzeugen der Parameterdaten auch eine Vorverarbeitung der Parameter und ein Speichern der vorverarbeiteten Parameter erfolgen. So kann beispielsweise aus den Parametern eine Kenngröße extrahiert werden, die dann gespeichert und für die weitere Auswertung bereitgehalten wird. Wenn beispielsweise zur Reduktion der vorzuhaltenden Daten nicht das SNR und die Modulationsart für jeden einzelnen Subkanal gespeichert werden soll, so kann eine Bewertungsskala für die Bewertung eines Subkanals genutzt werden. Nach der Bewertungsskala würden die Subkanäle mit einer Punktzahl - einer Kenngröße - versehen, wenn ein Subkanal gewisse Qualitätsanforderungen erfüllt. Diese Kenngröße kann aussagekräftig genug sein, so dass nicht die Speicherung aller Details notwendig ist.

Zum Vermeiden des Aufnehmens eines planmäßigen Abschaltens oder eines Ausfalls einer PLC-Komponente können der Datensammeleinheit in solchen Fällen entsprechende Informationen zur Verfügung gestellt werden. Die Datensammeleinheit würde dann die entsprechenden PLC-Komponenten aus dem Sammeln von Parametern ausnehmen. Alternativ können diese Informationen der Verarbeitungseinheit zur Verfügung gestellt werden, die dann die entsprechende PLC-Komponente in der Zeit des Ausfalls nicht in dem zeitlichen Verlauf berücksichtigt.

Vorzugsweise erfolgt der Schritt des Abfragens durch ein aktives Abfragen der Parameter von den PLC-Komponenten.

Das überwachte Versorgungsnetzwerk weist üblicherweise eine Vielzahl von Betriebsmitteln auf. Hierzu können beispielsweise Leitungen, Kabel, Transformatoren oder Leistungsschalter gehören. Besonders bevorzugter Weise wird das erfindungsgemäße Verfahren und das erfindungsgemäße System dazu verwendet, um Leitungs- bzw. Kabelstrecken zu überwachen.

Schließlich sei ausdrücklich darauf hingewiesen, dass auch mehrere der zuvor genannten Ausgestaltungen und Ausführungsbeispiele kombiniert genutzt werden können. So kann sich aus der Nutzung eines Parameters eine Tendenz ergeben, die durch Informationen aus einem oder mehreren weiteren Parametern bestätigt werden kann. Durch Kombination der Auswertung mehrerer Parameter kann damit die Zuverlässigkeit der Überwachung gesteigert werden.

## Patentansprüche

1. Verfahren zur Überwachung des Zustands eines Versorgungsnetzwerks hinsichtlich eines Fehlers oder einer aufkommenden Fehlerstelle in dem Versorgungsnetzwerk, wobei das Versorgungsnetzwerk zur Übertragung von elektrischer Energie und zur Datenübertragung unter Verwendung eines PLC-Systems - Power-Line Communication-Systems - ausgebildet ist, **gekennzeichnet durch** die Schritte:
wiederholtes Beziehen mindestens eines Parameters von mehreren Komponenten des PLC-Systems mittels einer Datensammeleinheit, wobei der mindestens eine Parameter jeweils zum Zwecke der Aufrechterhaltung einer Kommunikation gewonnene Informationen über die Nutzbarkeit eines Segments des Versorgungsnetzwerkes für die Datenübertragung enthält,
Speichern des durch die Datensammeleinheit bezogenen mindestens einen Parameters als Parameterdaten,
Bilden eines zeitlichen Verlaufs aus den Parameterdaten,
Bestimmen des Zustands und/oder einer Zustandsänderung des Versorgungsnetzwerks mittels einer Bewertungseinheit unter Verwendung des zeitlichen Verlaufs der Parameterdaten.

2. Verfahren nach Anspruch 1, **dadurch gekennzeichnet, dass** als Parameter Ergebnisse einer Kanalvermessung mittels Pilot Tones genutzt wird.

3. Verfahren nach Anspruch 1 oder 2, **dadurch gekennzeichnet, dass** als Parameter das SNR - Signal-to-Noise-Ratio - in dem PLC-Spektrum und/oder einem Subkanal des PLC-Spektrums ausgewertet wird, wobei bei zunehmenden hochfrequenten Störungen auf eine aufkommende Störung eines Segments des Versorgungsnetzwerks, insbesondere einen aufkommenden Kurzschluss, geschlossen werden kann.

4. Verfahren nach einem der Ansprüche 1 bis 3, **dadurch gekennzeichnet, dass** als Parameter ausgewertet wird, welche Modulationsart durch die PLC-Komponente in einem Subkanal verwendet wird.

5. Verfahren nach einem der Ansprüche 1 bis 4, **dadurch gekennzeichnet, dass** als Parameter die direkt durch eine PLC-Komponente erreichbaren Nachbarn ausgewertet wird, wobei vorzugsweise als Parameter ausgewertet wird, welcher erreichbare Nachbar einer PLC-Komponenten zur Übertragung von Daten genutzt wird.

6. Verfahren nach einem der Ansprüche 1 bis 5, **dadurch gekennzeichnet, dass** zur Gewinnung von Parametern ein breitbandiges Testsignal ausgesendet und eine Antwort auf das Testsignal gemessen wird, wobei das Testsignal vorzugsweise für den jeweiligen Testzweck angepasst ist.

7. Verfahren nach einem der Ansprüche 1 bis 6, **dadurch gekennzeichnet, dass** als Parameter die Impedanz einer Strecke des Versorgungsnetzwerks, insbesondere eine Zugangsimpedanz einer PLC-Komponente, ausgewertet wird.

8. Verfahren nach einem der Ansprüche 1 bis 7, **dadurch gekennzeichnet, dass** als Parameter AFE-Parameter - Analog Frontend-Parameter - ausgewertet werden, wobei die AFE-Parameter vorzugsweise die Sendeverstärkung und/oder die Empfangsverstärkung umfassen.

9. Verfahren nach einem der Ansprüche 1 bis 8, **dadurch gekennzeichnet, dass** als Parameter die Anzahl von Verbindungsabbrüchen ausgewertet wird.

10. Verfahren nach einem der Ansprüche 1 bis 9, **dadurch gekennzeichnet, dass** als Parameter ein Weg ausgewertet wird, über den Daten zwischen zwei PLC-Komponenten ausgetauscht werden.

11. Verfahren nach einem der Ansprüche 1 bis 10, **dadurch gekennzeichnet, dass** als Parameter Informationen über die Notwendigkeit einer Fehlerkorrektur eines empfangenen PLC-Datenpakets und/oder die Notwendigkeit der Anfrage einer erneuten Sendung eines PLC-Datenpakets ausgewertet wird.

12. Verfahren nach einem der Ansprüche 1 bis 11, **dadurch gekennzeichnet, dass** bei dem Schritt des Speicherns aus dem bezogenen Parameterdaten eine Kenngröße extrahiert und der Kenngröße als Parameterdaten abgespeichert wird.

13. System zur Überwachung des Zustands eines Versorgungsnetzwerks hinsichtlich eines Fehlers oder einer aufkommenden Fehlerstelle in dem Versorgungsnetzwerk, wobei das Versorgungsnetzwerk zur Übertragung von elektrischer Energie und zur Datenübertragung unter Verwendung eines PLC-Systems - Power-Line Communication-Systems - ausgebildet ist, wobei das PLC-System aus mehreren PLC-Komponenten besteht,
**gekennzeichnet durch**:
eine Datensammeleinheit zum wiederholten Sammeln von mindestens einem Parameter von mehreren der PLC-Komponenten, wobei der mindestens eine Parameter jeweils zum Zwecke der Aufrechterhaltung einer Kommunikation gewonnene Informationen über die Nutzbarkeit eines Segments des Versorgungsnetzwerkes für die Datenübertragung enthält,
eine Verarbeitungseinheit zum Speichern des durch die Datensammeleinheit bezogenen mindestens einen Parameters als Parameterdaten und zum Bilden eines zeitlichen Verlaufs aus den Parameterdaten,
einer Bewertungseinheit zum Ermitteln des Zustands und/oder einer Zustandsänderung des Versorgungsnetzwerks unter Verwendung des zeitlichen Verlaufs der Parameterdaten.

14. System nach Anspruch 13, **dadurch gekennzeichnet, dass** eine PLC-Komponente durch ein PLC-Modem, ein PLC-Gateway, einen PLC-Repeater, einen PLC-Verstärker, einer CU - Central Unit - und/oder ein NMS - Network Management System - gebildet ist.

15. System nach Anspruch 13 oder 14, **dadurch gekennzeichnet, dass** das PLC-System durch ein Breitband-Power-Line-System - BPL-System - gebildet ist.

## Claims

1. Method for monitoring the state of a power supply network with regard to a failure or an impending failure location in the power supply network, wherein the power supply network is constructed for transmitting electrical energy and for data transmission using a PLC system - Power Line Communication system -
**characterised by** the steps of:
repeatedly acquiring at least one parameter from a plurality of components of the PLC system by means of a data collection unit, wherein the at least one parameter contains in each case information obtained for the purposes of maintaining a communication relating to the usability of a segment of the power supply network for the data transmission,
storing the at least one parameter acquired by the data collection unit as parameter data,
forming a time path from the parameter data,
establishing the state and/or a state change of the power supply network by means of an evaluation unit using the time path of the parameter data.

2. Method according to claim 1, **characterised in that** results of a channel measurement by means of pilot tones is used as a parameter.

3. Method according to claim 1 or claim 2, **characterised in that** the SNR - Signal-to-Noise ratio - in the PLC spectrum and/or a sub-channel of the PLC spectrum is evaluated as a parameter, wherein with increasing high-frequency disruptions a conclusion can be drawn with regard to an impending disruption of a segment of the power supply network, in particular an impending short-circuit.

4. Method according to any one of claims 1 to 3, **characterised in that** it is evaluated as a parameter which type of modulation is used in a sub-channel by the PLC component.

5. Method according to any one of claims 1 to 4, **characterised in that** the neighbours which can be reached directly by a PLC component are evaluated as a parameter, wherein it is preferably evaluated as a parameter which reachable neighbour of a PLC component is used to transmit data.

6. Method according to any one of claims 1 to 5, **characterised in that**, in order to obtain parameters, a broadband test signal is transmitted and a response to the test signal is measured, wherein the test signal is preferably adapted for the respective test purpose.

7. Method according to any one of claims 1 to 6, **characterised in that** the impedance of a path of the power supply network, in particular an access impendence of a PLC component, is evaluated as a parameter.

8. Method according to any one of claims 1 to 7, **characterised in that** AFE parameters - Analog Front-end parameters - are evaluated as a parameter, wherein the AFE parameters preferably comprise the transmission amplification and/or the reception amplification.

9. Method according to any one of claims 1 to 8, **characterised in that** the number of connection interruptions is evaluated as a parameter.

10. Method according to any one of claims 1 to 9, **characterised in that** there is evaluated as a parameter a path, over which data are exchanged between two PLC components.

11. Method according to any one of claims 1 to 10, **characterised in that** information relating to the necessity for error correction of a PLC data packet received and/or the necessity for requesting a new transmission of a PLC data packet is evaluated as a parameter.

12. Method according to any one of claims 1 to 11, **characterised in that**, in the step of storing, a characteristic variable is extracted from the acquired parameter data and the characteristic variable is stored as parameter data.

13. System for monitoring the state of a power supply network with regard to a failure or an impending failure location in the power supply network, wherein the power supply network is constructed for transmitting electrical energy and for data transmission using a PLC system - Power Line Communication system - wherein the PLC system comprises a plurality of PLC components,
**characterised by**:
a data collection unit for repeated collection of at least one parameter from a plurality of the PLC components, wherein
the at least one parameter contains in each case information obtained for the purposes of maintaining a communication relating to the usability of a segment of the power supply network for the data transmission,
- a processing unit for storing the at least one parameter acquired by the data collection unit as parameter data and for forming a time path from the parameter data,
- an evaluation unit for establishing the state and/or a state change of the power supply network using the time path of the parameter data.

14. System according to claim 13, **characterised in that** a PLC component is formed by a PLC modem, a PLC gateway, a PLC repeater, a PLC amplifier, a CU - Central Unit - and/or an NMS - Network Management System.

15. System according to claim 13 or claim 14, **characterised in that** the PLC system is formed by a Broadband Power Line system - BPL system.

## Revendications

1. Procédé de surveillance de l'état d'un réseau d'alimentation en ce qui concerne un défaut ou un emplacement de défaut qui apparaît dans le réseau d'alimentation, le réseau d'alimentation étant constitué pour la transmission d'énergie électrique et pour la transmission de données avec utilisation d'un système PLC - système power line communication -
**caractérisé par** les étapes :
l'acquisition répétée d'au moins un paramètre de plusieurs composants du système PLC au moyen d'une unité de collecte de données, le paramètre au moins au nombre de un contenant respectivement, en vue du maintien d'une communication, des informations obtenues sur le caractère utilisable d'un segment du réseau d'alimentation pour la transmission de données,
l'enregistrement, en tant que données paramétriques, du paramètre au moins au nombre de un acquis par l'unité de collecte de données,
la formation d'une allure dans le temps à partir des données paramétriques,
la détermination de l'état et/ou d'une variation d'état du réseau d'alimentation au moyen d'une unité d'évaluation avec utilisation de l'allure dans le temps des données paramétriques.

2. Procédé selon la revendication 1, **caractérisé en ce que** des résultats d'une mesure de canal au moyen de pilot tones sont utilisés en tant que paramètre.

3. Procédé selon la revendication 1 ou 2, **caractérisé en ce que**, en tant que paramètre, le SNR - signal-to-noise-ratio - dans le spectre PLC et/ou dans un sous-canal du spectre PLC est analysé, dans lequel, en cas d'augmentations de perturbations haute fréquence, il est possible de conclure à la survenue d'une perturbation d'un segment du réseau d'alimentation, en particulier à la survenue d'un court-circuit.

4. Procédé selon l'une des revendications 1 à 3, **caractérisé en ce que**, en tant que paramètre, il est analysé quel type de modulation est utilisé par le composant PLC dans un sous-canal.

5. Procédé selon l'une des revendications 1 à 4, **caractérisé en ce que**, en tant que paramètre, les voisins directement accessibles par un composant PLC sont analysés, dans lequel, en tant que paramètre, il est de préférence analysé quel voisin accessible d'un composant PLC est utilisé pour la transmission de données.

6. Procédé selon l'une des revendications 1 à 5, **caractérisé en ce que**, pour obtenir des paramètres, un signal test à large bande est émis, et une réponse au signal test est mesurée, dans lequel le signal test est de préférence adapté pour l'objectif de test respectif.

7. Procédé selon l'une des revendications 1 à 6, **caractérisé en ce que**, en tant que paramètre, l'impédance d'un tronçon du réseau d'alimentation, en particulier une impédance d'accès d'un composant PLC, est analysée.

8. Procédé selon l'une des revendications 1 à 7, **caractérisé en ce que**, en tant que paramètre, des paramètres AFE - paramètres analog frontend - sont analysés, dans lequel les paramètres AFE comprennent de préférence l'amplification d'émission et/ou l'amplification de réception.

9. Procédé selon l'une des revendications 1 à 8, **caractérisé en ce que**, en tant que paramètre, le nombre de pertes de connexion est analysé.

10. Procédé selon l'une des revendications 1 à 9, **caractérisé en ce que**, en tant que paramètre, un chemin est analysé, par le biais duquel des données sont échangées entre deux composants PLC.

11. Procédé selon l'une des revendications 1 à 10, **caractérisé en ce que**, en tant que paramètre, des informations sur la nécessité d'une correction de défaut d'un paquet de données PLC reçu et/ou la nécessité de la demande d'une émission renouvelée d'un paquet de données PLC sont analysées.

12. Procédé selon l'une des revendications 1 à 11, **caractérisé en ce que**, lors de l'étape de l'enregistrement, une grandeur caractéristique est extraite des données paramétriques acquises, et la grandeur caractéristique est stockée en tant que données paramétriques.

13. Système de surveillance de l'état d'un réseau d'alimentation en ce qui concerne un défaut ou un emplacement de défaut qui apparaît dans le réseau d'alimentation, le réseau d'alimentation étant constitué pour la transmission d'énergie électrique et pour la transmission de données avec utilisation d'un système PLC - système power line communication -, le spectre PLC se composant de plusieurs composants PLC,
**caractérisé par** :
une unité de collecte de données destinée à la collecte répétée d'au moins un paramètre de plusieurs des composants PLC, dans lequel le paramètre au moins au nombre de un contient respectivement, en vue du maintien d'une communication, des informations obtenues sur le caractère utilisable d'un segment du réseau d'alimentation pour la transmission de données,
une unité de traitement destinée à l'enregistrement, en tant que données paramétriques, du paramètre au moins au nombre de un acquis par l'unité de collecte de données, et à la formation d'une allure dans le temps à partir des données paramétriques,
une unité d'analyse destinée à déterminer l'état et/ou une variation d'état du réseau d'alimentation avec utilisation de l'allure dans le temps des données paramétriques.

14. Système selon la revendication 13, **caractérisé en ce qu'**un composant PLC est formé par un modem PLC, une PLC-gateway, un PLC-repeater, un amplificateur PLC, une CU - central unit - et/ou un NMS - network managing system.

15. Système selon la revendication 13 ou 14, **caractérisé en ce que** le système PLC est formé par un système power-line à large bande - système BPL.
